(19) Europäisches Patentamt
European Patent Office
Office européen des brevets

(11) Publication number: **0 351 794 A2**

(12) # EUROPEAN PATENT APPLICATION

(21) Application number: 89113176.5

(51) Int. Cl.⁴: B41M 5/26

(22) Date of filing: 18.07.89

(30) Priority: 19.07.88 JP 180046/88
24.08.88 JP 209695/88
26.08.88 JP 213326/88
12.09.88 JP 227955/88
18.04.89 JP 98508/89

(43) Date of publication of application:
24.01.90 Bulletin 90/04

(84) Designated Contracting States:
DE FR GB

(71) Applicant: NITTO DENKO CORPORATION
1-2, Shimohozumi 1-chome Ibaraki-shi
Osaka(JP)

(72) Inventor: Miyawaki, Emiko
c/o NITTO DENKO CORP 1-2, Shimohozumi 1-chome
Ibaraki-shi Osaka(JP)
Inventor: Hotta, Yuuji
c/o NITTO DENKO CORP 1-2, Shimohozumi 1-chome
Ibaraki-shi Osaka(JP)

(74) Representative: Patentanwälte Grünecker, Kinkeldey, Stockmair & Partner
Maximilianstrasse 58
D-8000 München 22(DE)

(54) **Heat-fixable ink, pattern sheet using the same and method of pattern formation.**

(57) A heat-fixable ink is disclosed, which comprises a metal oxide having a specific gravity greater than that of a heat-fusible ink receiving layer on which the ink is to be fixed and a heat-fusible binder. Another heat-fixable ink is disclosed, which comprises a metal oxide and a heat-fusible binder comprising an acid wax or comprising an acrylic resin and a wax. A pattern sheet and a method of pattern formation are disclosed, which use the heat-fixable ink. The heat-fixable ink exhibits improved fixing properties to provide a pattern having improved abrasion resistance.

Fig. 1

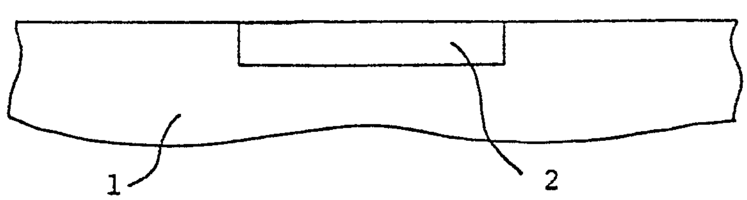


EP 0 351 794 A2

# HEAT-FIXABLE INK, PATTERN SHEET USING THE SAME AND METHOD OF PATTERN FORMATION

## FIELD OF THE INVENTION

This invention relates to a heat-fixable ink excellent in fixing properties, heat resistance, and abrasion resistance; an ink sheet containing the heat-fixable ink; a pattern sheet having a pattern comprising the heat-fixable ink; a process for producing the pattern sheet by using the ink sheet; and a method of pattern formation.

## BACKGROUND OF THE INVENTION

With attention having been drawn to advantages of thermal transfer recording systems, such as size reduction of a recording device, ease in maintenance of a recording device, and its low noise, the thermal transfer recording systems have been widespread in the OA (office automation) field, e.g., in word processors, in the FA (factory automation) field or the POS (point of sales) systems, e.g., in bar code printers. Accordant to the spread of the systems, performance requirements for heat-fixable inks to be used therefor have been increasing. For example, the ink is required to exhibit heat resistance enough to withstand high temperature preservation and abrasion resistance enough to withstand long-term preservation. A heat-fixable ink having high heat resistance can be used, for example, in ID labels having a bar code, etc., to be applied to products, semi-products or parts made of glass, baked ceramic or metals which are subject to heat treatment, thereby making product control easier particularly in systems of small quantity production of many kinds of products.

Conventional heat-fixable inks comprise a heat-fusible binder and pigments, e.g., carbon. However, in cases where a pattern formed on an adherend with the known heat-fixable ink is heat-treated at high temperatures (e.g., above about 300 °C), the pattern disappears by combustion or suffers denaturing and is hence of no practical use any longer.

A heat-fixable ink containing a glass powder so as to be fixed on baking has been proposed (e.g., in Nikkei Sangyo Shimbun (Nikkei Industrial Times), December 16, 1987 and ditto, March 15, 1988) but proved disadvantageous in that heat-fixing requires much time and that the pattern formed by such an ink is so poor in abrasion resistance that it is easily damaged by external shock or contaminates its surroundings.

## SUMMARY OF THE INVENTION

One object of this invention is to provide a heat-fixable ink excellent in heat resistance and abrasion resistance.

Another object of this invention is to provide a heat-fixable ink having improved fixing properties, such as fixability at low temperatures and fixability in a reduced time.

A still another object of this invention is to provide an ink sheet and a pattern sheet using the above-described heat-fixable ink, which provides a pattern having improved fixing properties and/or improved abrasion resistance.

A further object of this invention is to provide a method of forming a pattern using the above-described heat-fixable ink.

Other objects and effects of this invention will be apparent from the following description.

As a result of extensive investigations, it has now been found that the above objects of this invention can be accomplished by using a metal oxide as a component of a heat-fixable ink in combination with a heat-fusible binder. It has further been found that fixing properties at a low temperature in a short time can be obtained by using a metal oxide having a pH of from 5 to 8 as measured according to JIS K 5101-1978 published on May 1, 1978 (referred simply to "JIS K 5101" hereinafter) or, as a heat-fusible binder, an acid wax or a combination of an acrylic resin and a wax. It has further been found that a heat-fixable ink containing a metal oxide having a specific gravity greater than that of an ink-receiving layer of an ink-receiving sheet provides a pattern with its surface being on substantially the same plane of the ink-receiving layer upon heating. Having no projection on the ink-receiving sheet, such a pattern exhibit improved abrasion resistance.

A pattern sheet on which a pattern is integral with an ink-receiving layer can be obtained by forming a pattern using the above-described heat-fixable ink on an ink-receiving layer of an ink-receiving sheet and heat-treating the sheet to fuse the pattern and the ink-receiving layer together. In using a pattern sheet comprising a ceramic sheet as an ink-receiving sheet, there can be provided a baked patterned sheet.

That is, the present invention firstly relates to a heat-fixable ink comprising a metal oxide and a heat-fusible binder. The metal oxide preferably has a pH of from 5 to 8 as measured according to JIS K 5101.

The present invention secondly relates to a

heat-fixable ink comprising a metal oxide having a specific gravity greater than that of a heat-fusible ink-receiving layer serving as an ink-fixing base (on which the ink is to be fixed) and a heat-fusible binder.

The present invention thirdly relates a heat-fixable ink comprising a metal oxide and a heat-fusible binder comprising an acid wax.

The present invention fourthly relates to a heat-fixable ink comprising a metal oxide and a heat-fusible binder comprising an acrylic resin and a wax.

The present invention fifthly relates to an ink sheet comprising a support having provided thereon any of these heat-fixable inks.

The present invention sixthly relates to an ink ribbon cartridge containing any of the above-mentioned ink sheets.

The present invention seventhly relates to a pattern sheet comprising a heat-fusible ink-receiving layer of an ink-receiving sheet or a transfer sheet having provided thereon a pattern formed with any of the above-described heat-fixable inks.

The present invention eighthly relates to a method for producing the above-described pattern sheet which comprises forming and fixing a pattern on an ink-receiving layer using any of the above-described ink sheets by means of a thermal transfer printer.

The present invention ninthly relates to a method of forming a pattern which comprises adhering any of the above-described pattern sheets to an adherend and heating the pattern sheet to fuse the pattern and the ink-receiving layer together.

The present invention tenthly relates to a method of forming a pattern which comprises adhering an ink-receiving sheet having an ink-receiving layer thereon to an adherent, forming a pattern on the ink-receiving layer with any of the above-described heat-fixable inks, and heating the ink-receiving sheet to fuse the pattern and the ink-receiving layer together.

## BRIEF DESCRIPTION OF THE DRAWINGS

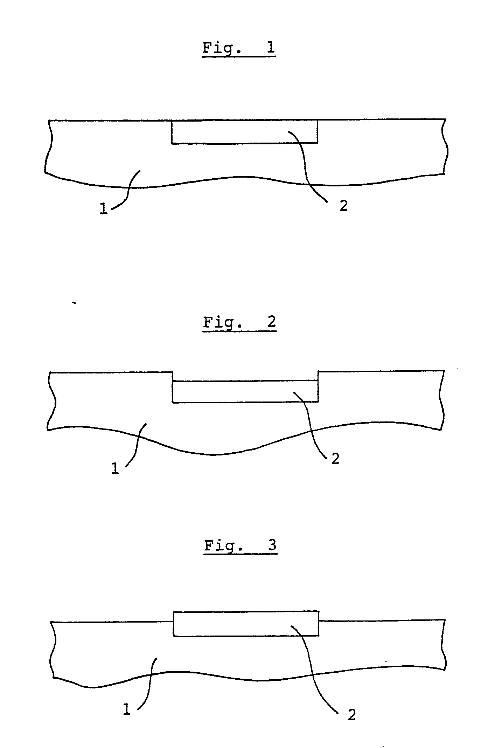

Figures 1 to 3 each is the cross section of a preferred embodiment of the patterned sheet according to the present invention.

## DETAILED DESCRIPTION OF THE INVENTION

The heat-fixable ink according to the present invention comprises a metal oxide and a heat-fusible binder.

The metal oxide which can be used includes oxides of at least one metallic element selected from cobalt, chromium, iron, copper, zinc, magnesium, tin, manganese, aluminum, nickel, titanium, etc. Typical examples of the metal oxide are $Co(Al.Cr)_2O_4$, $CoO.ZnO$, $(ZnFe)(FeCr)_2O_4$, $CuCr_2O_4$, $MnPO_4$, $(CuMn)(CrMn)_2O_4$, $(CoFe)(FeCr)_2O_4$, $Fe_2O_3$, $CoO.Al_2O_3$, $Co_2TiO_4.NiOZnO$, and $2\text{-}(Co.Mg)O.SnO_2$. From the standpoint of fixability at a low temperature in a short time, those metal oxides having a pH of from 5 to 8, particularly from 5 to 7, as measured according to JIS K 5101 are preferred. From the standpoint of abrasion resistance, those metal oxides having a specific gravity greater than that of an ink-receiving layer of an ink-receiving sheet on which a pattern is to be formed, particularly having a specific gravity of from 4 to 6, are preferred.

In order to obtain a heat-fixable ink which is fused to form a pattern with its surface having substantially the same plan as the heat-treated surface of the ink-receiving layer, it is preferable to use a metal oxide having a specific gravity greater than the ink-receiving layer by at least 0.5. For example, when an ink-receiving layer of the ink-receiving sheet comprises a resin component, e.g., an epoxy resin (specific gravity: 0.9 to 1.2), a metal oxide having a specific gravity of from 2.0 to 4.5 is preferred. When the ink-receiving sheet is a ceramic sheet (specific gravity: 2.5 to 4.2), a metal oxide having a specific gravity of from 3.0 to 6.0 is preferred. If the specific gravity of the metal oxide exceeds 6.0, stability or coating precision of the heat- fixable ink become poor in some cases. In using ceramic sheets, a metal oxide having a specific gravity of about 4 or more is preferred in view of abrasion resistance.

The diameter of the metal oxide is preferably 15 µm or less, and more preferably from 0.5 to 2.0 µm.

The heat-fusible binder which can be used in the present invention includes waxes without any particular limitation. Examples of preferred waxes are paraffin waxes, e.g., paraffin wax, microcrystalline wax, and polyethylene wax; natural waxes, e.g., bees wax, carnauba wax, and Japan wax; higher alcohol waxes, e.g., stearyl alcohol and palmityl alcohol; higher amide waxes, e.g., stearamide, oleamide, and palmitamide; ester waxes, e.g., Hoechst wax, butyl stearate, ethyl palmitate, an myristyl stearate; acid waxes comprising higher fatty acids, e.g., stearic acid, palmitic acid, behenoic acid, myristic acid, capric acid, lauric acid, and 1,20-eicosanedicarboxylic acid; and sorbitan derivatives. More preferred of them are acid waxes from the viewpoint of fixability at a low temperature in a short time. Examples of the sorbitan derivative include that represented by the following formula.

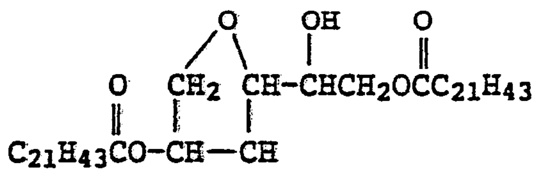

Polymers, either hydrophilic or hydrophobic, may be used as a heat-fusible binder in combination with the waxes. Polymers having a softening point between 40 and 200 °C as determined by the ring and ball test are preferably employed. The hydrophilic polymers include naturally occurring high polymeric substances such as proteins, e.g., gelatin, gelatin derivatives, and casein, and polysaccharides, e.g., cellulose derivatives, and starch; and synthetic polymers such as water-soluble polymers, e.g., polyvinyl alcohol, polyvinylpyrrolidone, and acrylamide polymers, and polymer latices, e.g., vinyl latices and urethane latices. The hydrophobic polymers which can be preferably used are polyvinyl butyral, polyvinyl formal, polyethylene, polypropylene, polyamide, ethyl cellulose, cellulose acetate, polystyrene, polyvinyl acetate, polyvinyl chloride, polyvinylidene chloride, vinyl chloride-vinyl acetate copolymers, ethylene-vinyl acetate copolymers, vinyl chloride-vinylacetate-maleic acid terpolymers, and rosin derivatives, e.g., rosin esters. Additional examples of usable polymers are described in U.S. Patents 3,062,674, 3,142,586, 3,143,388, 3,220,844, 3,287,289, and 3,411,911.

From the standpoint of fixability at a low temperature and in a short time, a combined use of an acrylic resin as a heat-fusible binder is desirable. The acrylic resin includes homopolymers or copolymers of an acid monomer (e.g., acrylic acid, methacrylic acid) and an ester monomer (e.g., methyl acrylate, methyl methacrylate, ethyl acrylate, ethyl methacrylate, n-butyl acrylate, n-butyl methacrylate, isobutyl acrylate, and isobutyl methacrylate) and copolymers comprising these monomers and not more than 20% by weight, preferably not more than 10% by weight, of vinyl monomers (e.g., ethylene, styrene, vinyl acetate, vinyl chloride, butylene, isobutylene, and butadiene). Among these, a polymer comprising n-butyl methacrylate is preferably used. In view of functions as a binder, the acrylic resins having a weight average molecular weight of from about 50,000 to 550,000, particularly from 200,000 to 400,000, are preferred.

A ratio of the metal oxide, wax, and polymer in the heat-fixable ink can be selected appropriately. The amount of the wax is generally from 10 to 500 parts by weight, preferably from 30 to 400 parts by weight, per 100 parts by weight of the metal oxide. The amount of the polymer is generally up to 500 parts by weight, preferably from 1 to 400 parts by weight, more preferably from 5 to 300 parts by weight, per 100 parts by weight of the metal oxide. The heat-fixable ink can be prepared by appropriately mixing these components.

If desired, the heat-fixable ink according to the present invention may further contain additives, such as vegetable oils, e.g., castor oil, linseed oil, olive oil; animal oils, e.g., whale oil; and mineral oils.

The ink sheet according to the present invention comprises a support having provided thereon the above-described heat-fixable ink by coating or impregnation. For particular use in pattern formation on a ceramic sheet, the ink sheet preferably has provided thereon a heat-fixable ink containing a metal oxide having a specific gravity of from 4 to 6 and particularly further having a pH of from 5 to 8 as determined according to JIS K 5101.

In the ink sheet of the present invention, the metal oxide is preferably present in an amount of from 1.5 to 3 $g/m^2$, particularly from 2.0 to 2.5 $g/m^2$. If the metal oxide spread is less than 1.5 $g/m^2$, the ink sheet tends to privide a low recording density, resulting in a unclear pattern. If it exceeds 3 $g/m^2$, the fixed pattern tends to be damaged by external shocks or to contaminate its surroundings.

The support which can be used in the ink sheet includes paper, inclusive of condenser paper, laminated paper and coated paper; synthetic resin films of polyethylene, polypropylene, polyester, polystyrene, or polyimide; paper/film composites; metallic sheets, e.g., an aluminum foil; and fabric made of polyamide fibers, polyimide fibers, or polyester fibers.

For application to thermal transfer printers, it is preferable that the support for the ink sheet is excellent in heat resistance, dimensional stability, and surface smoothness. In more detail, it is preferable that the support should exhibit heat resistace and dimensional stability sufficient for retaining toughness as a support without being softened or plasticized at a heating temperature of a heat source, e.g., thermal printer head, and also possess surface smoothness which causes no interference with transfer of the heat-fixable ink. From the standpoint of transfer rate and image reproduction accuracy, the support preferably has a degree of smoothness of not less than 100 seconds, more preferably not less than 300 seconds, as determined with a Beck tester according to JIS P 8119. The support usually has a thickness of not more than about 60 µm, preferably from 2 to 20 µm, taking heat conduction into consideration.

The technique for providing the heat-fixable ink on the support is not particularly restricted, and any known method is applicable. For example, the heat-fixable ink dissolved or dispersed in an appropriate solvent is coated on a support. Examples of the solvent includes toluene, methyl ethyl ketone, methyl isobutyl ketone, ethyl acetate, butyl acetate, methanol, ethanol, isopropanol, solvent naphtha, hexane, and heptane. Coating can be carried out by means of a reverse roll coater, an extrusion coater, a gravure coater, and a wire bar. In the case where the heat-fixable ink is applied to the support by coating, the coat thickness is usually not more than 15 µm, preferably between 2 and 10 µm, though more or less varying depending on the metal oxide content. The surface of the support opposite to the coated surface may have any appropriate structure such as provided with an antisticking layer comprising, e.g., a curable silicone resin.

The ink sheet of the present invention can be used as it is for thermal transfer recording. If necessary, the ink sheet may be slit to ribbon of a suitable width, e.g., thermal transfer ribbon, stamping transfer ribbon, and stamping printing ribbon, and the ribbon can be put in a case to make an ink ribbon cartridge suitable for application to various printers.

The heat-fixable ink or ink sheet of the present invention can be applied to an adherend made of various materials such as paper, plastics, metals, and ceramic. In the case when an adherent is directly printed with the ink by a heating means, such as a thermal transfer printer, the ink can be fixed thereon simultaneously. When an adherent is patterned without using a heating means, for example, when a pattern formed on transfer paper is transferred to an adherend, the ink can be fixed through heat application, for example, by means of a hot roll. The heat application for ink fixing may be effected on the adherend.

The pattern sheet according to the present invention comprises an ink-receiving sheet having an ink-receiving layer or a transfer sheet having provided thereon a pattern of the heat-fixable ink. The pattern formed on the ink-receiving layer of the ink-receiving sheet may be fixed for some uses. Since the pattern formed on the transfer sheet, on the other hand, is to be transferred to another adherent, it is not fixed to the transfer sheet.

The ink-receiving sheet which can be used in the pattern sheet includes a sheet composed of a heat-resistant film base having provided thereon an ink-receiving layer serving as an ink fixing base which comprises an inorganic powder and a resin; and a ceramic sheet containing a glass powder or a ceramic powder.

The former ink-receiving sheet is designed for use at relatively low temperatures of from about 150 to 300 °C (hereinafter referred to as ink-receiving sheet for low temperature use). This type of sheet is obtained by forming an ink-receiving layer comprising a resin (e.g., epoxy resins, acrylic resins, and polyester resins) and an inorganic powder on a film or a laminate thereof comprising a heat-resistant resin (e.g., polyester resins, polyimide resins).

The latter ceramic ink-receiving sheet is designed for use at high temperatures, particularly of from 300 to 1,400 °C (hereinafter referred to as ink-receiving sheet for high temperature use). The ceramic sheet includes those comprising a powder of glass (e.g., lead glass, lead borosilicate, soda glass, silicate glass, and quartz glass) and, if desired, an inorganic substanoe (e.g., ceramic, metals or metal oxides) and an organic binder as described in JP-A-62-223057 (the term "JP-A" as used herein means an "unexamined published Japanese patent application"). Thus, the ceramic sheet containing a glass powder or a ceramic powder serves by itself as an ink-receiving layer. The ceramic sheet adhered to an adherent and having received a heat-fixable ink can be baked to obtain a baked pattern integrated with the baked sheet fixed to an adherent. When a distinct contrast or change of tone is required between the heat-fixable ink pattern and the heated-treated ink-receiving layer depending on the use, for example, as an ID label, the ink-receiving layer is preferably colored to an appropriate tone by addition of pigments or fillers.

The pattern to be formed on the ink-receiving layer of the ink-receiving sheet may includes bar codes, latterings, and patterns of ceramic ware. The method of forming a pattern on the ink-receiving layer is also arbitrary. For example, in using the heat-fixable ink per se or an ink composition, a pattern can be formed by handwriting or application through a mask for pattern formation. In the case of using an ink sheet, a pattern can be formed by the use of an appropriate printer, e.g., an XY plotter, a wire dot printer, a thermal transfer printer, and an impact printer. Use of the printers makes it possible to form a pattern, e.g., a letter pattern, a bar code pattern, a transfer pattern, and a china-painting pattern, efficiently and precisely.

The pattern sheet using an ink-receiving sheet can be preferably produced by using an ink sheet for a heat transfer system and a thermal transfer printer to conduct pattern formation simultaneously with pattern fixing. This technique is advantageous not only in that a high production efficiency can be achieved but in that the resulting pattern sheet exhibits excellent handling properties, for example, adhering to an adherent. Further, when the pattern sheet obtained by this method is heat treated, there can be provided "a patterned sheet" having a pattern excellent in abrasion resistance as hereinafter described. The term a "patterned sheet" used herein means a sheet having a pattern

excellent in abrasion resistance.

Methods for forming a pattern on an adherend includes a method in which a pattern sheet comprising an ink-receiving sheet is adhered to an adherent and then heat-treated, and a method comprising adhering an ink-receiving sheet to an adherent, forming a pattern with the heat-fixable ink on the ink-receiving layer of the ink-receiving sheet, and then heat treating the sheet. The former method employing a previously prepared pattern sheet is advantageous in that an adherent is easily endowed with a fine and precise pattern previously formed on the pattern sheet by an appropriate printer, etc. The latter method, in which an ink-receiving sheet is adhered to an adherent and then a pattern is formed on the ink-receiving sheet to make a pattern sheet, is preferably applied to the case where the adherent is a plate or a sheet. In either method, a pattern of the heat-fixable ink may be formed on an appropriate transfer sheet (e.g., release paper, a release film and a metal foil) by a known method, such as screen printing, and then the pattern may be transferred to an ink-receiving sheet to make a pattern sheet.

Heat treatment of a pattern sheet adhered to an adherent can be carried out at a heating temperature properly selected according to the kind of the ink-receiving sheet. In the case of using the ink-receiving sheet for low temperature use, the heat during processing may be utilized for the heat treatment. By the heat treatment, the heat-fixable ink and the ink-receiving layer are fused together to provide a desired "patterned sheet" on which the pattern is firmly integrated with the ink-receiving layer. In the case of using a ceramic sheet, it is possible to subject the pattern sheet to baking, whereby the fused ceramic powder acts as an adhesive and adheres to an adherent while keeping the ink pattern hot to provide a baked pattern excellent in heat resistance.

When the heat-fixable ink on the pattern sheet contains a metal oxide having a specific gravity greater than that of the ink-receiving layer, it is preferable to effect heat treatment to such an extent that the metal oxide may sink by its weight in the ink-receiving layer to thereby form the pattern surface on substantially the same level of the surface of the heated sheet. In this case, preferred embodiments include (1) a patterned sheet in which the patterned surface and the sheet surface have the same plane, (2) a patterned sheet in which the patterned surface slightly sinks in below the sheet level, and (3) a patterned sheet in which part of the pattern layer is buried in the sheet. Such a pattern is excellent in abrasion resistance or long-term durability. The cross sections of the preferred embodiments (1), (2) and (3) above are shown in Figures 1, 2 and 3, respectively. In Figures 1 to 3, the ink-receiving layer is represented by 1, and the pattern formed of the heat-fixable ink is represented by 2.

In order to increase adhesion of the ink-receiving sheet to an adherent, an adhesive layer may be provided to the ink-receiving sheet, if desired. In the case where a ceramic sheet is baked, an adhesive which can be burnt off on baking is suitably used. In the case of using an ink-receiving sheet for low temperature use, a heat-resistant adhesive or thermosetting adhesive is suitably used. It is desirable to apply a separator to the adhesive surface to improve handling proprties. Application of an adhesive can be performed automatically by means of a robot.

The adherent to which the present invention is applicable includes not only finished articles, such as glass products, baked ceramics, and metallic products, but also unfinished articles, such as unbaked ceramic molding articles. Baking of an unfinished article (unbaked ceramic) can be carried out simultaneously with baking of a ceramic pattern sheet.

The pattern formation method according to the present invention is suitably applied to painting of china, glassware, enamelware, and the like. It is also suitably applicable to labeling of products, semi-products or parts made of glass, ceramic or metals, carrier pallets, and particularly heat-resistant base plates made of ceramic, etc., and experimental products with ID labels containing a company name, a lot number, an item, a receipient, an importer, or any other ID signs, colors, patterns or bar codes. The application of the pattern formation method of the present invention is not limited to the foregoing, and includes pattern formation for other various purposes.

In the present invention, the heat-fixable ink using a metal oxide having a specific pH and/or a heat-fusible binder comprising an acid wax or a combination of an acrylic resin and a wax is excellent in fixing performance in a low temperature and in a short time. The ink sheet and pattern sheet containing such a heat-fixable ink are accordingly excelent in fixing performance and provide fixed patterns which are excellent in abrasion resisance and have long duration on an adherent. The ink sheet and pattern sheet is also advantageous of capability of easily forming a fine and accurate pattern.

The heat-fixable ink using a metal oxide having a greater specific gravity than that of an ink-receiving layer is excellent in sinking in the ink-receiving layer upon heat treatment. The ink sheet and pattern sheet containing such a heat-fixable ink provide a patterned sheet in which the pattern surface and the sheet surface have substantially the same plane so that the pattern adhered onto an adherend

can be fixed thereto for an extended period of time without undergoing damages due to external shocks, exhibiting improved abrasion resistance. In particular, an ink sheet having provided thereon a metal oxide having a specific gravity of from 4 to 6 in a specific amount is excellent in formation of a clear and abrasion-resistant pattern on ceramic sheets.

The method of pattern formation according to the present invention can easily be applied to adherends having a curved surface to provide an arbitrary pattern easily and according to the requirements of the case. That is, the method makes it possible to easily provide a pattern inclusive of ID labels and decorative painting, not only in mass-production but in small-scale production of many items. In addition, a baked pattern fixed on an adherent by baking is excellent in durability, heat resistance, and chemical resistance.

The present invention is now illustrated in greater detail by way of Reference Examples and Examples, but it should be understood that the present invention is not demed to be limited thereto. In the following description, all the parts are by weight unless otherwise specified.

## REFERNCE EXAMPLE 1

A glass powder-containing layer (thickness: 50 µm) comprising 100 parts of $BaO \cdot CaO \cdot SiO_2$ glass, 12 parts of isobutyl polymethacrylate, 4 parts of dibutyl phthalate, and 1 part of oleic acid was formed on an adhesive layer provided on a separator to prepare a glass powder-contining sheet (ceramic sheet).

## REFERENCE EXAMPLE 2

A glass powser-containing layer (thickness: 50 µm, specific gravity: 2.5) comprising 100 parts of $Na_2O \cdot B_2O_3 \cdot SiO_2$ glass (specific gravity: 2.7), 12 parts of polyisobutyl methacrylate, 4 parts of dibutyl phthalate, and 1 part of oleic acid was formed on an adhesive layer provided on a separator to prepare a glass powder-containing sheet.

## REFERENCE·EXAMPLE 3

An ink-receiving layer (thickness: 50 µm specific gravity: 2.0) comprising 50 parts of titania (specific gravity: 3.8), 50 parts of calcium carbonate, 32 parts of a bisphenol A type epoxy resin, 1.3 parts of a phenolic resin type curing agent, 0.5 part of 2-n-heptadecylimidazole, and 11 parts of nitrile rubber was formed on a polyimide film to prepare an ink-receiving sheet for low temperture use.

## EXAMPLE 1

Fifty parts of $CuCr_2O_4$ (pH: 6.0; specific gravity: 5.33), 45 parts of paraffin wax, and 5 parts of an ethylene-vinyl acetate copolymer were uniformly dispersed in toluene to prepare a heat-fixable ink composition.

The composition was coated on a 5 µm thick polyester film to a dry thickness of about 5 µm by means of a coating machine, followed by drying to prepare an ink sheet.

The ink sheet was slit to a prescribed width, and the resulting ribbon was put in a case to obtain an ink ribbon cartridge.

A prescribed bar cord pattern was printed on the glass powder-containing layer of the glass powder-containing sheet as prepared in Referece Example 1 by using the above produced ink ribbon cartridge by means of a general thermal transfer printer to obtain a pattern sheet.

The resulting pattern sheet was adhered to a stainless steel plate, whose surface having been heat-oxidized, via an adhesive layer of the pattern sheet and then baked at 550 °C for 10 minutes to obtain a baked pattern fixed on the stainless steel plate. The organic components used such as paraffin wax were burnt off during the baking.

The resulting baked pattern was tested for abrasion resistance in accordance with JIS H 8503. The pattern did not wear off, proving excellent in fixing properties.

## COMPARATIVE EXAMPLE 1

A heat-fixable ink, an ink sheet, a pattern sheet, and a baked pattern were obtained in the same manner as in Example 1, except for replacing $CuCr_2O_4$ with $Co \cdot Al_2O_4$ (pH: 9.0). As a result of abrasion test according to JIS H 8503, the pattern partly underwent abrasion due to insufficient fixing and became indistinguishable.

## EXAMPLE 2

The glass powder-containing sheet as prepared in Reference Example 1 was adhered via its adhesive layer around a cylinder (curvature radius: 50 mm) made of a stainless steel sheet with its surface having been heat- oxidized. A pattern of the heat-fixable ink as prepared in Example 1 was printed on transfer paper by screen printing and then transferred onto the cylinder and baked at 550 °C for 10 minutes to obtain a stainless steel cylinder on which a baked clear pattern was fixed. The organic components such as paraffin wax were burnt off during the baking.

EXAMPLE 3

Fifty parts of $CO_2TiO_4 \cdot NiOZnO$ (specific gravity: 5.0), 35 parts of paraffin wax, and 15 parts of an ethylene-vinyl acetate copolymer were uniformly dispersed in toluene by means of a roll mill to prepare a heat-fixable ink composition (specific gravity: 3.0).

The composition was coated on a 6 µm thick polyester film to a dry thickness of about 5 µm by means of a coating machine and dried to prepare an ink sheet.

The ink sheet was slit to a prescribed width, and the resulting ink ribbon was put in a case to obtain an ink ribbon cartridge. A prescribed bar cord pattern was printed on the glass powder-containing layer of the glass powder-containing sheet as prepared in Reference Example 2 by using the above-prepared ink ribbon cartridge by means of a general thermal transfer printer to obtain a pattern sheet.

The pattern sheet was adhered via its adhesive layer onto a stainless steel sheet whose surface had been heat-oxidized and then baked at 750 °C for 30 minutes to obtain a baked pattern fixed on the stainless steel sheet. The organic components such as paraffin wax were burnt off during the baking.

The thus formed baked pattern had substantially the same plane as the sheet. As a result of abrasion test according to JIS H 8503, the pattern did not wear away, proving excellent in fixing properties.

EXAMPLE 4

A prescribed pattern was printed on the ink-receiving layer of the ink-receiving sheet for low temperature use as obtained in Reference Example 3 with the heat-fixable ink as prepared in Example 3 by means of a general thermal transfer printer to obtain a pattern sheet.

The resulting pattern sheet was heat-treated at 150 °C for 30 minutes. The thus heat-treated pattern was found to have the same plane as the sheet (ink-receiving layer). When tested for abrasion resistance according to JIS H 8503, the pattern did not wear off, proving excellent in fixing properties.

EXAMPLE 5

Thirty parts of $CuCr_2O_4$, 49 parts of a sorbitan derivative shown below, and 21 parts of an ethylene-vinyl acetate copolymer were uniformly dispersed in toluene in a roll mill to prepare a heat-fixable ink composition.

Sorbitan derivative:

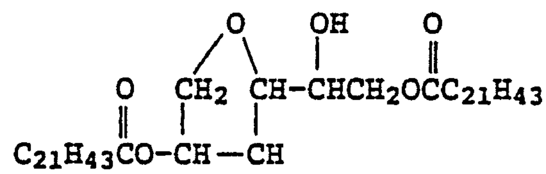

The composition was coated on a 6 µm thick polyester film to a dry thickness of about 10 µm by means of a coating machine and dried to prepare an ink sheet. The coverage of $CuCr_2O_4$ of the ink sheet was 2.2 g/m$^2$.

The ink sheet was slit to a prescribed width, and the resulting ribbon was placed in a case to obtain an ink ribbon cartridge. A prescribed bar cord pattern was printed on the glass powder-containing layer of the glass-containing sheet as obtained in Reference Exampl 1 by using the ink ribbon cartridge by means of a general thermal transfer printer to obtain a pattern sheet. The thus formed pattern was very clear.

The pattern sheet was adhered to a stainless steel plate whose surface had been heat-oxidized via it adhesive layer and baked at 500 °C for 30 minutes to obtain a baked pattern fixed on the stainless steel plate. The organic components such as the sorbitan derivative was burned off during the baking.

The thus formed pattern had substantially the same plane as the sheet surface. When tested for abrasion resistance according to JIS H 8503, the pattern did not wear off, proving excellent in fixing properties.

COMPARATIVE EXAMPLE 2

A heat-fixable ink composition was prepared by using 50 parts of $CuCr_2O_4$, 35 parts of a sorbitan derivative, and 15 parts of an ethylene-vinyl acetate copolymer in the same manner as in Example 5. An ink sheet, a pattern sheet, and a baked pattern were obtained by using the composition in the same manner as in Example 5. The coverage of $CuCr_2O_4$ of the ink sheet was 5.3 g/$m^2$.

When the baked pattern was tested for abrasion resistance according to JIS H 8503, the metal oxide in the unfixed area of the baked pattern worn out to contaminate the surroundings of the pattern, making the pattern indistinguishable.

## COMPARATIVE EXAMPLE 3

A heat-fixable ink composition was prepared by using 20 parts of $CuCr_2O_4$, 56 parts of a sorbitan derivative, and 24 parts of an ethylene-vinyl acetate copolymer in the same manner as in Example 5. An ink sheet, a pattern sheet, and a baked pattern were obtained by using the composition in the same manner as in Example 5. The coverage of $CuCr_2O_4$ of the ink sheet was 1.2 g/$m^2$.

When tested for arasion resistance according to JIS H 8503, the baked pattern underwent reduction in density resulting in reduced contrast and became indistinguishable.

## EXAMPLE 6

Fifty parts of $CuCr_2O_4$, 35 parts of stearic acid, and 15 parts of an ethylene-vinyl acetate copolymer were uniformly dispersed in toluene in a roll mill to prepare a heat-fixable ink composition.

An ink sheet and an ink ribbon cartridge were prepared by using the resulting ink composition in the same manner as in Example 3. A prescribed bar cord pattern was printed on the glass powder-containing layer of the glass powder-containing sheet as obtained in Reference Example 1 by using the resulting ink ribbon cartridge by means of a general thermal transfer printer to obtain a pattern sheet.

The pattern sheet was adhered via its adhesive layer to a stainless steel plate whose surface had been heat-oxided and baked at 530 °C for 10 minutes to obtain a baked pattern fixed to the stainless steel plate. The organic components such as stearic acid were burnt off during the baking.

When tested for abrasion resistance according to JIS H 8503, the baked pattern did not wear out, proving excellent in fixing properties.

## EXAMPLE 7

Fifty parts of CoO•ZnO (specific gravity: 5.5) and 50 parts of behenoic acid were uniformly dispersed in toluene in a roll mill to prepare a heat-fixable ink composition. A prescribed pattern was printed with the ink composition on a transfer paper by screen printing.

The glass powder-containing sheet as obtained in Reference Example 1 was adhered via its adhesive layer onto a cylinder (curvature radius: 50 mm) of stainless steel whose surface had been heat-oxidized, and the pattern on the transfer paper was transferred to the glass powder-containing layer of the glass powder-containing sheet. The cylinder having the pattern thereon was baked at 530 °C for 10 minutes to obtain a stainless steel cylinder to which a baked pattern was fixed. The pattern was clear and excellent in fixing properties. The organic components such as behenoic acid were burnt off during the baking.

## EXAMPLE 8

Fifty parts of $CuCr_2O_4$, 35 parts of stearic acid, and 15 parts of poly(n-butyl methacrylate) having a weight average molecular weight of about 360,000 were uniformly dispersed in a mixed solvent of toluene and ethanol in a roll mill to prepare a heat-fixable ink composition. An ink sheet, an ink ribbon cartridge, and a pattern sheet were obtained by using the ink composition in the same manner as in Example 6.

The pattern sheet was adhered via its adhesive layer to a stainless steel plate whose surface had been heat-oxidized, and baked at 500 °C for 10 minutes to obtain a baked pattern fixed to the stainless steel plate. During the baking, the organic components in the ink composition such as stearic acid were burned off.

When tested for abrasion resistance according to JIS H 8503, the baked pattern did not wear off, proving excellent in fixing properties.

## EXAMPLE 9

The procedure of Example 7 was repeated, except for using the heat-fixable ink composition as prepared in Example 8 and baking at 500 °C for 10 minutes. The baked pattern obtained was clear and excellent in fixing properties. The organic components such as stearic acid were burnt off during the baking.

## EXAMPLE 10

Fifty parts of CoO•ZnO, 50 parts of paraffin wax, and 15 parts of a methyl acrylate-acrylic acid-vinyl acetate terpolymer (60/30/10 by weight) having a weight average molecular weight of about 200,000 were uniformly dispersed in toluene in a roll mill to prepare a heat-fixable ink composition. An ink sheet, a pattern sheet, and a baked sheet were obtained by using the ink composition in the same manner as in Example 8. During the baking, the organic components such as paraffin wax were burnt off during the baking.

When tested for abrasion resistance according to JIS H 8503, the baked pattern did not wear off, proving excellent in fixing properties.

## COMPARATIVE EXAMPLE 4

The procedure of Example 10 was repeated, except for replacing the methyl acrylate-acrylic acid-vinyl acetate copolymer with an ethylene-vinyl acetate copolymer (50/50 by weight).

When tested for abrasion resistance according to JIS H 8503, the baked pattern partly worn out due to insufficient fixing and became indistinguishable.

As described in the foregoing, the heat-fixable ink of the present invention is excellent in heat resistance, abrasion resistance and fixing properties; and the ink sheet and the pattern sheet of the present invention provides a pattern having excellent fixing properties and abrasion resistance.

While the invention has been described in detail and with reference to specific embodiments thereof, it will be apparent to one skilled in the art that various changes and modifications can be made therein without departing from the spirit and scope thereof.

## Claims

1. A heat-fixable ink comprising a metal oxide and a heat-fusible binder.

2. The heat-fixable ink as claimed in claim 1, wherein said metal oxide has a pH of from 5 to 8 as measured according to JIS K 5101.

3. A heat-fixable ink comprising a metal oxide having a specific gravity greater than that of a heat-fusible ink receiving layer on which the ink is to be fixed and a heat-fusible binder.

4. A heat-fixable ink comprising a metal oxide and a heat-fusible binder comprising an acid wax.

5. A heat-fixable ink comprising a metal oxide and a heat-fusible binder comprising an acrylic resin and a wax.

6. An ink sheet comprising a support having provided thereon a heat-fixable ink as claimed in claim 1.

7. An ink sheet comprising a support having provided thereon a heat-fixable ink as claimed in claim 2.

8. An ink sheet comprising a support having provided thereon a heat-fixable ink as claimed in claim 3.

9. An ink sheet comprising a support having provided thereon a heat-fixable ink as claimed in claim 4.

10. An ink sheet comprising a support having provided thereon a heat-fixable ink as claimed in claim 5.

11. The ink sheet as claimed in claim 6, wherein the heat-fixable ink comprises a metal oxide having a specific gravity of from 4 to 6 and a heat-fusible binder and said metal oxide is present in an amount of from 1.5 to 3 $g/m^2$.

12. An ink ribbon cartridge comprising a case having put therein an ink sheet as claimed in claim 6.

13. A pattern sheet comprising an ink-receiving sheet having a heat-fusible ink-receiving layer on which a pattern is formed with a heat-fixable ink as claimed in claim 1.

14. A method for producing a pattern sheet as claimed in claim 13, which comprises forming and fixing a pattern on the ink-receiving layer by using the ink sheet as claimed in claim 6 by means of a thermal transfer printer.

15. A pattern sheet comprising a transfer sheet on which a pattern is formed with a heat-fixable ink as claimed in claim 1.

16. A method for forming a pattern which comprises adhering a pattern sheet as claimed in claim 13 to an adherent and heat-treating the pattern sheet to fuse the pattern and the ink-receiving layer together.

17. A method for forming a pattern which comprises adhering an ink-receiving sheet having an ink- receiving layer to an adherent, forming a pattern on the ink-receiving layer with a heat-fixable ink as claimed in claim 1, and heat-treating the pattern to fuse the pattern and the ink-receiving layer together.

18. The method as claimed in claim 16, wherein said heat-treating is carried out to such an extent that the pattern of the heat-fixable ink as claimed in claim 3 has substantially the same plane as the heat-treated surface of the ink-receiving layer.

Fig. 1

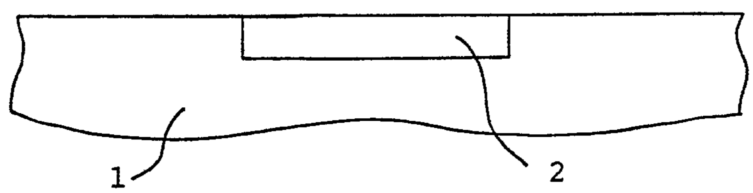


Fig. 2

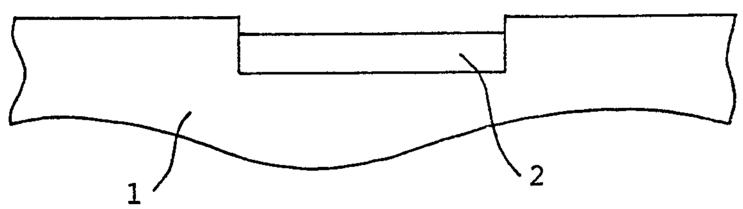


Fig. 3